# EUROPEAN PATENT APPLICATION

(11) **EP 1 513 239 A1**
(43) Date of publication of application: **09.03.2005**
(21) Application number: 03255502.1
(22) Date of filing: 03.09.2003
(51) Int. Cl.: H02J 7/00

(54) **Automatic charging system for an auxiliary battery**

(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(57) **Abstract**

Automatic Surveillance Revolving Storage Battery Auxiliary Charging System, to compare the value as controlled by an artificial control or the value as set in a central control unit, with a testing signal produced by a battery charge level detector circuit operating in line with said artificial control or CCU, so as to drive, in a controlled manner, an auxiliary power supply in the form of a D.C. charge converted from an A.C. line feeder, or to drive the engine generator straight, equipped with a variety of operative functions as optional.

## Description

### BACKGROUND OF THE INVENTION

### (a) Field of the Invention

The subject automatic surveillant revolving storage battery auxiliary charging system is a system using engine generator as power supply to perform, where appropriate, auxiliary charging with respect to as-installed battery or vehicle-laden battery, in order for the battery to maintain in an adequately charged condition, featuring in particular, preferential power supply to the load.

### (b) Description of the Prior Art

Battery, developed to date, by reason of its convenience for carriage from one place to another and volumetric density, up to utility level, is nowadays frequently used for purposed of emergency power storage, or as a means of power supply to motor driven implements, power driven tooling or more generally as a D.C. power supply; the pity, however, is that where power supply is required for a prolonged term, or where efforts to enlarge dimensionally a battery would inevitably involve cost increases or weight increases, or still, where exposed to working at a more profound discharge depth the battery would suffer from a shortened service term.

### SUMMARY OF THE INVENTION

The subject Automatic Surveillant Revolving Storage Battery Auxiliary Charging System is intended to compare the value as controlled by an artificial control or the value as set in a central control unit CCU, with a testing signal produced by batter charge level survey circuit operating in line with said artificial control or CCU, so as to drive, in a controlled manner, an auxiliary power supply in the form of a D.C. power supply converted from a line voltage, or to drive the engine generator straight, equipped with a variety of operative functions as options.

### BRIEF DESCRIPTION OF THE DRAWINGS

Fig. 1 is a block diagram of the invention system;
Fig 2 is a block diagram of the invention system illustrated with a blocking diode CR101 and blocking element Z101 both provided to control battery potential and power as generated;
Fig. 3 is a block diagram showing, as incorporated in the invention system, a blocking diode CR101 and operable two-way switch SSW101, meant to control battery potential and power as generated;
Fig. 4 is a block diagram showing, as incorporated in the invention system, blocking diode CR101 and regulator RG101 meant to control contact switch SSW102 at point C, and that in turn to assume control of interacting operation between the battery potential and the auxiliary power supply;
Fig. 5 is a block diagram of the invention as regards the circuit for the auxiliary power supply PS100 which consists of the D.C. charge converted from an A.C. line voltage;
Fig. 6 is block diagram showing the invention defined by an A.C. line voltage and two sets of rectification circuit of equal voltage rating together with independently installed regulators serving respectively as motor drive power supply or battery charging power supply; and
Fig. 7 is a block diagram of the invention regarding the circuit for an A.C. line voltage and two sets of rectification circuits of dissimilar voltage ratings plus individual regulators serving respectively as motor drive power supply or battery charging power supply.

### DETAILED DESCRIPTION OF THE PREFERRED EMBODIMENTS

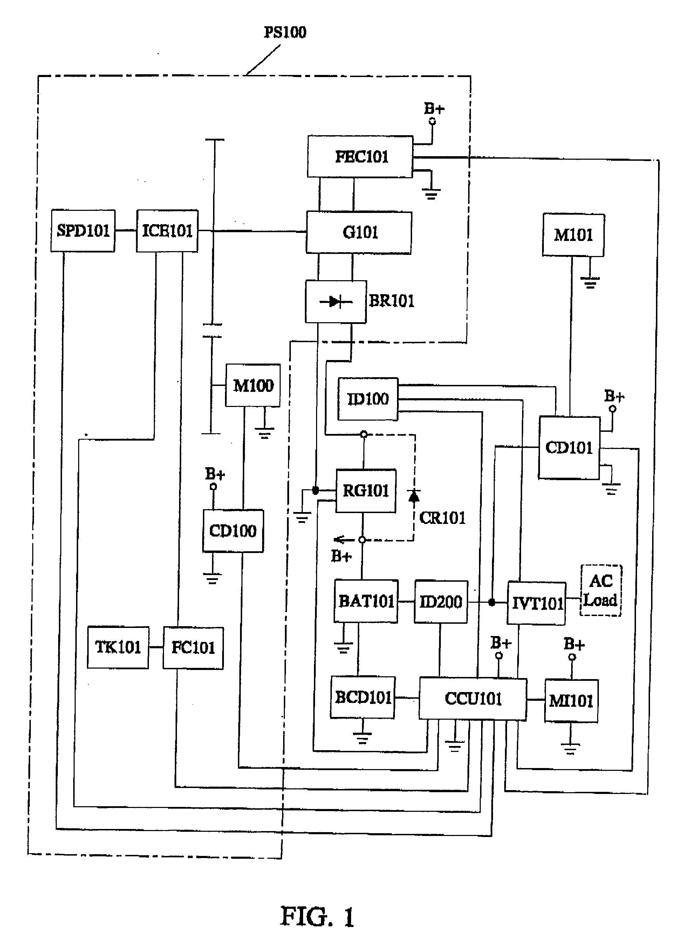

Referring to Fig. 1, a block diagram of the Invention System, it is seen that the subject System of Automatic Surveillant Revolving Storage Battery Auxiliary Charge is composed essentially of:
Battery BAT101: which is basically a secondary battery capable of repeated charging/discharging recycling operation, which can be, for example, a battery of the plumbic acid, nickel/cadmium, nickel/nitrogen, or nickel/zinc structure or else of the lithium system, or still of the zinc system battery or otherwise secondary battery, such a battery being irremovably installed to the circuit or alternatively instead installed complete with plug or socket assembly or with coupling allowing for rapid assemblage or removal;
Storage status detector BCD101: which is provided to conduct continuous or periodical testing or else to convert to digital or analogue power signal output for comparisons using as parameter the terminal voltage, or internal impedance, or volume or specific weight, as well as charging or discharging, or static loading errors for correction purposes; and consists of analogy comparison circuits incorporating electromechanical or solid state electronic elements, or alternatively digital comparison circuits incorporating microprocessor, associated software and interface electronic accessories; this detector assembly being an optional device;
Regulator RG101: composed of mechanic or solid state electronic elements, which by initiating a referring to the output voltage/current of an auxiliary power supply PS 100 which incorporates a D.C. charging capability by conversion from generator G101 or an A.C. line voltage, or by simply following an instruction issued from CCU101, feeds back the power rate that is being delivered from said auxiliary power supply PS100 in the form of a D.C. charging power converted from the A.C. line voltage or from the generator G101, this being an optional device subject to system considerations;
Current detector ID 100: connected to the output terminal of the auxiliary power supply PS100 which takes the form of a D.C. charging means converted from generator G101 or an A.C. line voltage, with current sampling means comprising resistive or conductive elements or a combination of both, but essentially resistive, or still in the form of a semiconductor voltage drop element, or still comprising field strength sensor, other means of heat cumulation or electromagnetic effect type capable of yielding current testing values to be converted into analogue signals with which to produce an output current for the generator G101, by which to control, regulate the regulator RG101, or else to be fed to CCU101, so as to control in turn the operation condition of generator G101, which is also an optional feature;
Current detector ID200: connected in series between input/output terminals of battery BAT101 and the drive control CD101 or rectifier IVT101; with current sampling means comprising purely resistive elements or purely conductive elements or a combination of both, or still semiconductor voltage drop element; or alternatively which may be comprised of a device by which analogue signals may be produced basing on the current determined by means of field strength sensors or heat cumulative or field effect probing units, serving to determine the current coming from or delivered to the Battery Set, and that meant to pass to the drive control CD101 or CCU101, this in turn to control the output power rate of the battery BAT101; this Detector being an optional feature dependent on system considerations;
Auxiliary power supply PS101: in the form of a revolving or reciprocating internal combustion engine assembly ICE101 meant to deliver output of kinetic mechanic energy by the combustion of gasoline, diesel oil, or gas or other form of fluid fuel in combination with A.C., D.C., brushless or brushed armature assembly, that is, generator G101, serving to convert the incoming engine revolving kinetic energy into D.C. power, or alternatively to convert A.C. power through rectification at rectifier BR101 into D.C. power; or alternatively the same PS101 is executed in a means to convert A.C. line voltage potential into D.C. charging power, serving eventually to drive load motor M101 or other loads, and to charge batteries;
Rectifier BR101: to convert by rectifying single phase or multiple phase A.C. power into D.C. power in dealing with A.C. generator, this being an optional feature dependent upon system requirements;
Field excited controller FEC101: composed of mechanic or solid state elements, to control the power generating from A.C. or D.C. generator comprising field excited windings, basing on generator output status and the manual control device MI101 and CCU101 settings, so as to achieve in regulatory control of voltage, current or power rate, this feature to be saved where the generator pole is of a permanent magnet type;
Engine speed detector SPD101: analogy or digital in execution, capable of converting angular displacements into correspondent electric signals in electromagnetic or photoelectric forms so as to feed engine speed signals to CCU101, and consequently regulate the feed of fuel way from servo-mechanism FC101, to engine set, while signal value of this device can also be substituted by the analogous voltage or frequency value of generator G101; this engine speed detector SPD101 can also be made to consist of mechanical structure, such as, for example, centrifugal testing structure or otherwise mechanical structure, and made in mechanical interaction with fuel supply servo-mechanism FC101 so as to bring engine set ICE101 into fixed speed rotation, both executions disclosed hereinbefore are to be adopted depending on the nature of the system involved, and the device on top of that, is an optional feature contingent on system requirements;
Starter motor M100: composed of an electric structure synchronous or asynchronous, A.C. or D.C., brushed or brushless, to receive input power so as to produce revolving power to initiate in turn the engine set ICE101, this being an optional feature dependent on system requirements;
Fuel supply servo-mechanism FC101: to receive electric power servo instructions or alternatively mechanic interaction, structured so as to control the fuel supply to engine set ICE101, and that in turn to regulate rotation speed and torsion on the part of engine set ICE101, this being an optional feature contingent upon system requirements;
Fuel tank TK101: where engine fuel is stored, to control fuel supplied to engine set ICE101 by means of fuel line and fuel supply servo-mechanism FC101 interconnected therebetween, this being an optional feature;
Drive control CD 100: comprising essentially mechanical or solid state power elements and associated circuits, to drive starter motor M100 into operation or else to stop its operation, this being an optional feature dependent upon system requirement, or contingent upon circuit configurations;
Drive control CD101: composed of mechanical or solid state elements and relevant circuits, to control the load motor M101 for forward/reverse rotation, speed regulation, startup and stop setting, in respect of which the quantity to be supplied per item is dependent upon system requirement, and this feature, on the whole, is optional upon system requirement too;
Load motor M101: composed of A.C. or D.C., brushed or brushless, synchronous or asynchronous motor, realizing forward rotation, reverse rotation, speed regulation, operation and stoppage and such like functions so as to transmit a load, this load motor M101 may also be in the form of another load or still, be replaced by another load, in respect of which the quantity of installation is dictated by system requirements;
Auxiliary power supply B+: with power sourced to battery BAT101 in the system, or with an additionally provided battery set serving as the auxiliary power supply or as derived from generator generation, and that in an effort to offer power supply to the central control unit CCU101, or manual control device MI101, or the drive control CD101 to load motor M101, or drive control CD100 to starter motor M100, or to field excited control FEC101, or still regulator RG101, or still else such as lighting facilities for actuation; where an auxiliary battery set is provided, the generator may be additionally furnished with correspondent power windings basing on required voltage and current capacities to facilitate charging of the auxiliary battery, this feature being an option contingent on system requirements;
D.C. to A.C. inverter IVT101: composed of solid state power rate elements and associated circuits, to convert D.C. power into A.C. power so as to drive A.C. loads, in respect of which the quantity to be supplied is contingent upon system requirements;
Central control unit CCU101: composed of mechanical or solid state elements which form alternatively analogy or digital structure or a combined structures of both executions; or still of micro-processor comprising operation and control software, D-A converter and A-D converter or other associated circuit elements, with control modes established internally basing on instructions given by manual control device MI101 or on feedback signals instead, so as to control and manipulate interactions between the system generator G101, the auxiliary power supply PS101 in the form of D.C. charge converted from an A.C. line feeder, the battery BAT101 and the load motor M101 or otherwise load, and the operation of other relevant installations as well; this being an optional feature contingent upon system requirements;
Manual control device MI101: composed singly of mechanic or solid state elements in analogy mode or digital mode as separate from or else in combination with each other, for feeding to the central control unit so as to control the overall system operation, in respect of which the quantity to be installed is dependent upon system requirements; and for that reason, this is an optional feature.

The invention titled Automatic Surveillant Revolving Storage Battery Auxiliary Charging System is designed essentially to maintain storage Battery in an adequately charged condition by using as its power supply an engine generator, or alternatively an auxiliary power supply PS 100 in the form of D.C. charge converted from an A.C. line feeder, so as to offer timely auxiliary charging to transmit a load motor or otherwise loads, or still to stationary or vehicle laden, or portable batteries. In operation, testing measurement is made, basing on manual control modes, or else on central control unit programmed for the purpose with battery storage condition taken into account, whereby circuit testing signal value is compared with aforementioned controlled or setting value, and that bringing about proportionate, controlled operation of the engine driven generation set or the auxiliary power supply PS100 in the form of D.C. charge converted from an A.C. line feeder, incorporating optionally various functions including any or all of the following:
(1) When the system is not actuated to drive a load, and the battery saturation status has been confirmed to drop to a level below a prescribed threshold, the engine startup motor must be activated manually or electrically and that in turn will initiate engine and generator set to charge the battery alone, the charging may alternatively take place by an A.C. line system such that charging is suspended once saturation is reached in the battery;
(2) To drive a load, a comparison is made of the saturation status of the battery in reference to the operation model set in the CCU, to follow that, the generator is regulated, or alternatively, the auxiliary power supply PS 100 in the form of D.C. charge converted from an A.C. line system, is operated to deliver output power of a constant current or controlled current, or alternatively, of a constant rated power, or of a controlled rated power, such that once the power required by the load exceeds the auxiliary power supply PS100, power required by the load motor or otherwise load will be jointly met by those supplied from the auxiliary power supply and the battery; and where power required by the load is less than the auxiliary power supply PS 100, the latter may feed power to the load and feed surplus power to the battery at the same time, and once the load is augmented in this manner to a level exceeding the power rating of the auxiliary power supply PS100, the system will shift automatically to operate in the model of function(3), while returning to rated power functioning where rated power on the load is inferior to the auxiliary power supply PS100;
(3) To run a power output under fixed current or controlled current, fixed power or controlled power condition, from the generator or from the auxiliary power supply PS100 in the form of D.C. charge converted from an A.C. line system, as controlled as a function of the level of saturation detected of the battery, that in order for the auxiliary power supply PS100 and battery to jointly activate the load motor or otherwise load pursuant to proportionate apportionment respecting the auxiliary power supply PS100 against the load power factor, or as regards current rapport, such that when the load is downgraded or the load power factor falls below the power factor of the auxiliary power supply PS100, and the system will shift to operate according to (2), in the negative case power available will remain functioning as usual for operation;
(4) The ability to verify load current status of the load motor when driven by the battery alone, such that once the power factor of the load motor or other loads rises to a level beyond the set value or beyond the set time, the auxiliary power supply PS 100 will effect a constant current or controlled current output, or instead effect a constant power factor or controlled power factor output, as a function of the control model having been set in the CCU, in an effort to drive the load in coordination with the battery, so that the auxiliary power supply PS100 may continue to deliver output of power to the load motor or another load once the power factor on the part of the load motor or of another load resumes a normal level;
(5) The ability to drive engine and generator duly in response to manipulation of manual control assembly, such an ability to drive extends to an auxiliary power supply PS 100 in the form of a D.C. charge converted from an A.C. line system, and the ability includes further independent driving of a load motor or other load by the output power from the same auxiliary power supply PS 100, and the same output power together with battery power to jointly drive a load in the event the load in the load motor is increased, and that output power from the auxiliary power supply PS 100 continuing to be delivered to the load when the battery stops outputting once the motor load resumes on a normal track;
(6) The ability to accept manipulation from the manual control unit so as to initiate engine and generator or an auxiliary power supply PS100 in the form of D.C. charge converted from an A.C. line system for a fixed current or controlled current output, or instead for a constant power factor or controlled power factor output, whereby proportionate apportionment is executed respecting the load power factor vis-à-vis current charge to drive the load motor and to charge the battery, such that the mode of operation will automatically shift to function (7) once the load is increased to a level beyond the charging power supply power factor, but switch back to the present mode of operation in the negative case;
(7) The ability to accept manipulation from the manual control unit so as to initiate engine and generator or an auxiliary power supply PS100 in the form of D.C. charge converted from an A.C. line system, for fixed current, controlled current mode, or else fixed power rating, or controlled power rating mode output, and that in appropriate apportionment vis-à-vis the battery basing on generation power factor or loading power factor or current differential between both, whereby the auxiliary power supply PS 100 together with the battery take charge of the driving of the load motor or otherwise loading, such that the system shifts automatically to function (6) once the load is alleviated such that the rated loading power drops below the rated power of the auxiliary power supply PS 100, but resumes operating under this function in the negative case;
(8) The ability to accept manipulation from manual control unit so as to initiate engine and generator or the auxiliary power supply PS100 in the form of D.C. charge converted from an A.C. line feeder for independent charge with respect to the battery;
(9) The provision to stop charging once the battery has reached predetermined saturation level as detected in the course of charging operation described under functions (1) and (8) hereinbefore;
(10) The provision to stop charging with respect to the battery without affecting power output being delivered from the auxiliary power supply PS 100 to the motor or otherwise load through manipulation by means of either the manual control unit or of the central control unit once the battery reaches a predetermined level in the course of operation pursued under function (2) and (6) described hereinbefore;
(11) The provision to stop charging with respect to the auxiliary power supply PS 100 concurrent with power being output to the motor or otherwise load way from the battery by means of manual mode control or CCU control once the battery has reached a predetermined saturation point as detected in the course of operation pursued under function (2)and(6) described hereinbefore;
(12) The provision for the engine generator assembly or the auxiliary power supply PS100 in the form of D.C. charge converted from an A.C. line feeder to continue operation while the battery switches from a charging state into feeding, in a joint effort with the auxiliary power supply PS 100, power to the motor or otherwise load, through manual control or central control unit control, once the battery has just reached a predetermined saturation level detected in the course of a charging operation described pursuant to function (2)and(6) hereinbefore;

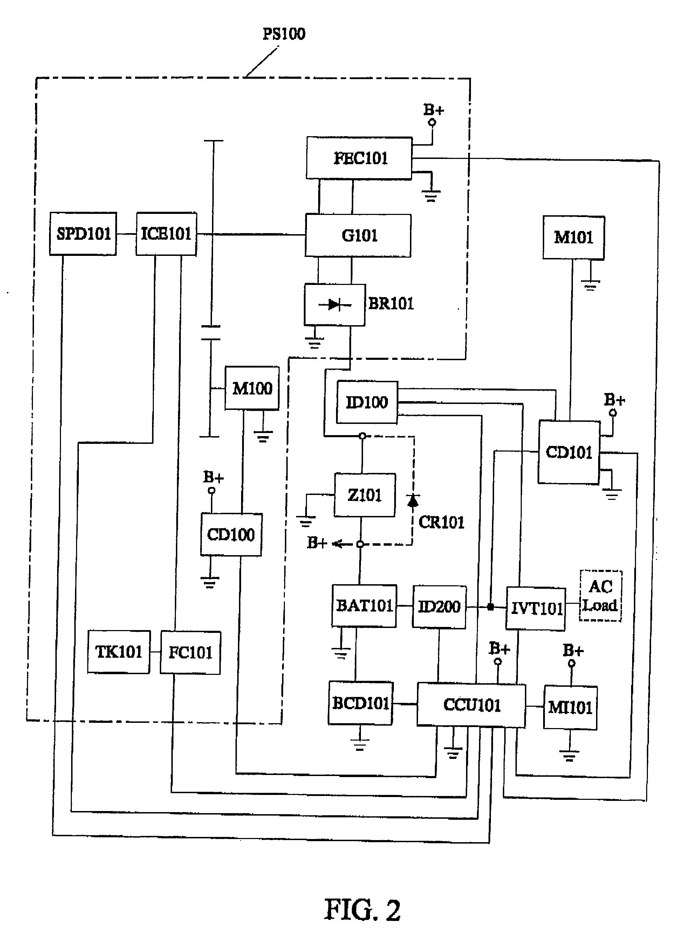

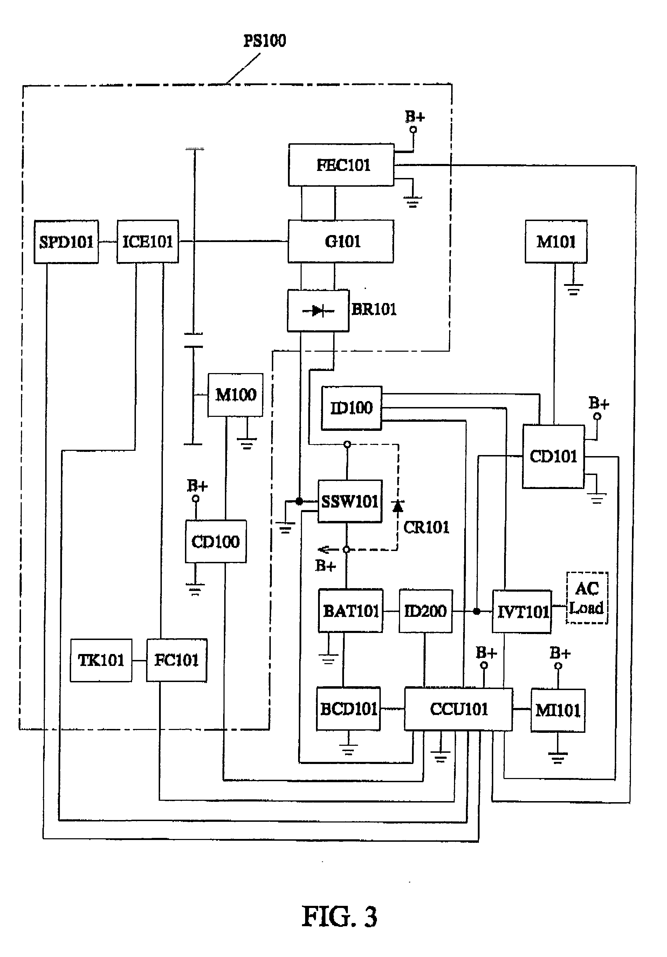

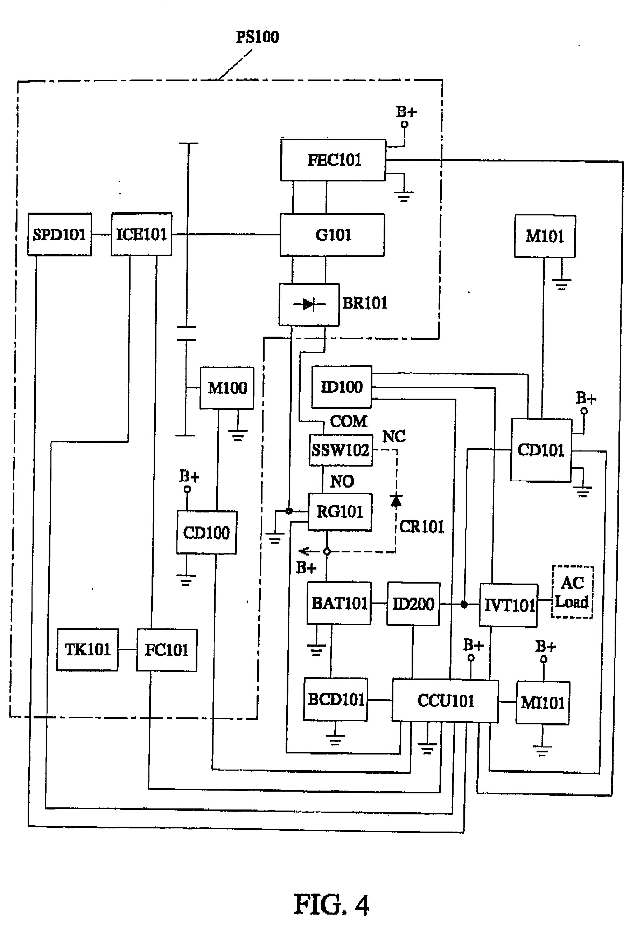

When the subject Automatic Surveillant Revolving Storage Battery Auxiliary Charging System is operating pursuant to function (2) and (6), with power output of the Generator G101 or else released from the auxiliary power supply PS100 in the form of D.C. charge converted from an A.C. line feeder set in parallel straight with the battery BAT101, disparity in battery saturation status will have the effect such that generator G101 produces a surge charging with respect to battery BAT101 so long as the battery remains at a relatively lower capacity level, it is then time to operate by means of the following control circuits comprising:
The arrangement for a blocking diode CR101 to be connected in forward series to battery BAT101, to thence form a parallel output with the D.C. output terminal straight of generator G101 or alternatively with that D.C. output terminal resultant from rectification of an A.C. source, or still with the auxiliary power supply PS 100 in the form of D.C. charge converted from an A.C. line feeder, while across both ends of the diode CR101 is paralleled a regulator RG101, so that RG101 1 is made active to regulate power that is charged way from the generator or alternatively the said auxiliary power supply PS100 in the form of D.C. charge converted from an A.C. line feeder to the battery; RG101 may be further adapted to be a receptor to control signals emitted from CCU101 basing on the testing result from battery storage detector BCD 101 so as to allow for regulation of charging rates or currents, and for control of startup or stopping of charging functions as well;
The arrangement for a blocking diode CR101 to be connected in forward series to battery BAT101, to thence form a parallel output with the D.C. output terminal straight of generator G101 or alternatively with that D.C. output terminal resultant from rectification of an A.C. source, or still with the auxiliary power supply PS100 in the form of D.C. charge converted from an A.C. line feeder, such as is exemplified in Fig.1;
The arrangement for a blocking diode CR101 to be serially forwardly connected to the battery BAT101, to thence form a parallel output with the D.C. output terminal straight of generator G101 or alternatively with that D.C. output resultant from rectification of an A.C. source, or still with the auxiliary power supply PS 100 in the form of D.C. charge converted from an A.C. line feeder, across said blocking diode CR101 may be paralleled (as shown in Fig. 2) an impedance element Z101 which is essentially resistive or conductive or a combination of both, to replace the function of the regulator RG101, to thereby restrict the current that is being released from the auxiliary power supply PS 100 into the battery;
The arrangement for a blocking diode CR101 to be serially forwardly connected to the battery BAT101, to thence form a parallel output with the D.C. output straight of generator G101 or alternatively with that D.C. output resultant from rectification of an A.C. source, or still with the auxiliary power supply PS100 in the form of D.C. charge converted from and A.C. line feeder, across said blocking diode CR101 may be paralleled an electromechanical or solid state controllable two-way switch SSW101, such as is shown in Fig. 3, to allow for on/off control of the outputs of both the battery BAT101 and the auxiliary power supply PS100 and that in substitution of the function of the regulator RG101, and that eventually serving to control the charging state on the part of the generator G101 or the auxiliary power supply PS 100 in the form of D.C. charge converted from an A.C. line feeder with respect to the battery BAT101 and next, the charging state of said battery BAT101, interpreted as output, to the load motor M101;
The arrangement for a blocking diode CR101 together with a regulator RG101 or an impedance element Z101 bearing similar functions or a controllable two-way switch SSW101 to be made in forward series with the output of the battery BAT101, so that the D.C. power that is supplied by the generator G101, or else by the auxiliary power supply PS100 in the form of D.C. charge converted from an A.C. line feeder, the output of the diode CR101 that is in forward series with the battery BAT101, and the output of the regulator RG101 or of the impedance element bearings similar functions Z101 or still of the controllable two-way switch SSW101, are of like polarity and this triplicate point is made in common with that switch SSW102 composed of electromechanical or solid state elements, as shown in Fig. 4, on which the point C is controllable, with one end of the auxiliary power supply PS 100 connected to the common point (COM) on the switch SSW102 featuring a controllable point C, and with the output of the diode CR101 1 and the input of the regulator RG101 be electively, as per circuit requirements, connected to the normally open (NO) point or normally closed (NC) point on the switch SSW102 featuring a controllable point C, what is achieved is the control, by means of the auxiliary power supply PS100, of the charging state of the battery, on one hand, and, of the output state on the part of the battery, with respect to the load motor M101 or otherwise loads, on the other hand.

The battery wherever mentioned hereinbefore, is executed where appropriate, either fixed as an installation in a circuit, or as a mobile, removable installation in a plug/socket assembly or otherwise combination form, associated with the primary circuit, featuring: (1) charging of the battery BAT101 the A.C. to D.C. mode; (2) charging of the battery BAT101 by D.C. converted from A.C., and the same current as input of power to the load; (3) charging of the battery BAT101 by D.C. converted from A.C. and the same current by way of the battery BAT101 delivering power to the load; (4) the battery BAT101 singly delivering power eventually to the load; (5) the battery BAT101 functioning as a filter, whereof that output terminal going to the load side is optionally equipped with a drive control CD101 serving to control output voltage or output current or output polarity or serving to protect in the event of an overloading condition, by activating the associated control circuits.

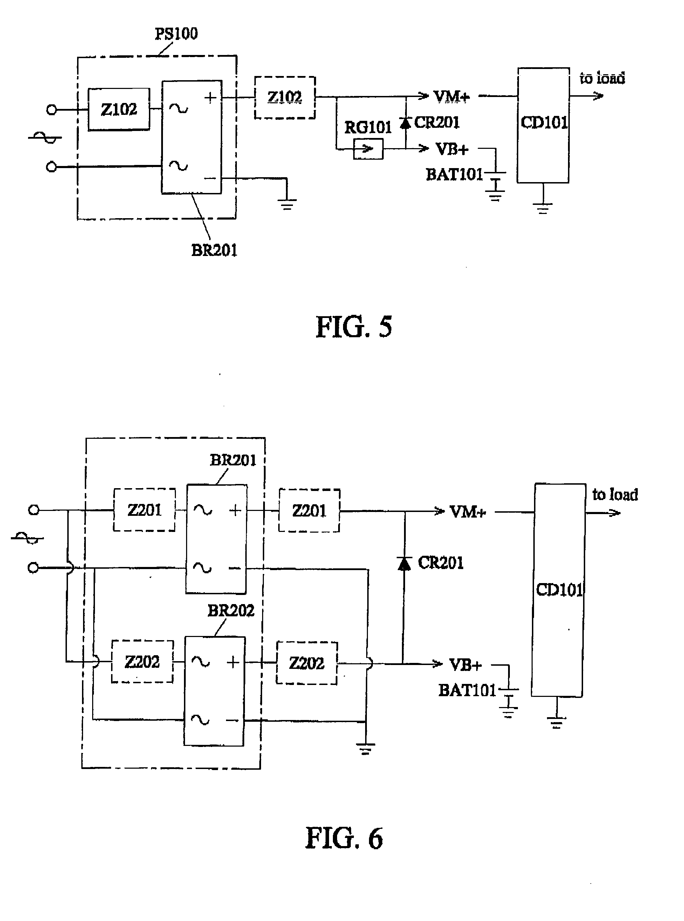

In the block diagram illustrating the invention embodied in an auxiliary power supply PS100 in the form of D.C. charge converted from an A.C. line feeder, given in Fig. 5, it will be appreciated that the incoming A.C. power source, gone through serial impedance means or wave interceptor circuit Z201, thence the rectifier BR201, serves forthwith as the power supply VM+ to the motor or otherwise Load, on the one hand, and as the charging power supply VB+ to battery BAT101 by way of serial connection of a regulation means, on the other hand, both power supplies defined as such constitutes the auxiliary power supply PS 100, with the impedance means or wave interceptor circuit Z201 in series with the A.C. side or the D.C. output side serving the purpose of current restriction, whereas the regulator RG101 in series with the D.C. output of the auxiliary power supply, constituted of analogy or wave interceptor circuits, serving to restrict charging current to the battery BAT101, of which the positive output terminal VB+ is fed to the power side VM+ of motor by way of a forward, serially connected diode CR201, the battery mentioned in the foregoing is executed where appropriate, either fixed as an installation in a circuit, or as a mobile, removable installation in a plug/socket assembly or otherwise combination form, associated with the primary circuit, featuring: (1) charging of the battery BAT101 the A.C. to D.C. mode; (2) charging of the battery BAT101 by D.C. converted from A.C., and the same current as input of power to the load; (3) charging of the battery BAT101 by D.C. converted from A.C. and the same current by way of the battery BAT101 delivering power to the load; (4) the battery BAT101 singly delivering power eventually to the load; (5) the battery BAT101 functioning as a filter, whereof that output terminal going to the load side is optionally equipped with a drive control CD101 serving to control output voltage or output current or output polarity or serving to protect in the event of an overloading condition, by activating the associated control circuits.

An illustration of the invention embodied to have like voltage A.C. line source and two sets of rectification circuits, plus independently installed regulators serving as motor drive power supply or battery charging power supply, in circuit diagram, is given in Fig. 6; in which it will be seen two sets of auxiliary power supply in the form of D.C. charge converted from A.C. source by way of rectifiers BR201 and BR202, with one set serving as the charging power supply VM+ to the motor or other load, on the one hand, and as the charging power supply VB+ to the battery BAT101, with the rectifier BR201 intervened by a serial connection of impedance means or wave interceptor circuit Z201 to the incoming A.C. source, to restrict charging current to the motor or other loads; the rectifier BR202 intervened by a serial connection of impedance means or wave interceptor circuit Z202 to the A.C. source, so as to restrict charging current to the battery BAT101, whereof the positive output terminal VB+ is given in forward series with a diode CR201, leading to the power side VM+ of the motor; said impedance means or wave interceptor Z201, Z202 are good not only for installation way between the incoming A.C. source and the rectifiers BR201, BR202, but also good for serial connection to the D.C. input terminal of rectifiers BR201, BR202, where appropriate; the A.C. source is of the single phase or multiple phase mode for straight input or for input by the intervention of a transformer, the battery mentioned in the foregoing is executed where appropriate, either fixed as an installation in a circuit or as a mobile, removable installation in a plug/socket assembly or otherwise combination form, associated with the primary circuit, featuring: (1) charging of the battery BAT101 the A.C. to D.C. mode; (2) charging of the battery BAT101 by D.C. converted from A.C. and the same current by way of the battery BAT101 delivering power to the load; (3) charging of the battery BAT101 by D.C. converted from A.C. and the same current by way of the battery BAT101 delivering power to the load; (4) the battery BAT101 singly delivering power eventually to the load; (5) the battery BAT101 functioning as a filter, whereof that output terminal going to the load side is optionally equipped with a drive control CD101 serving to control output voltage or output current or output polarity or serving to protect in the event of an overloading condition, by actuating the associated control circuits.

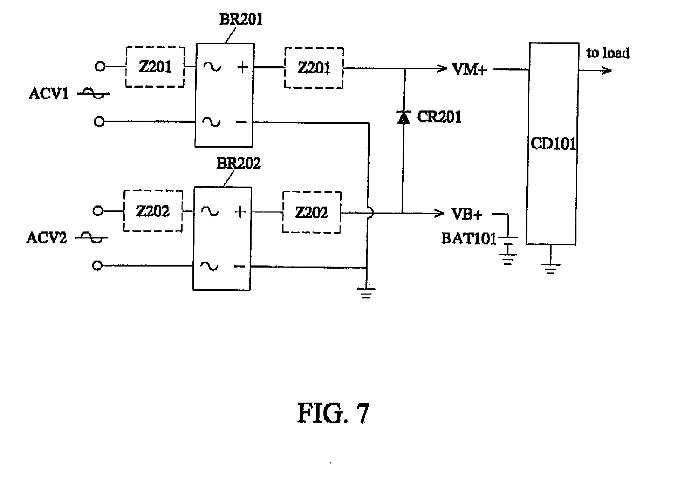

A block diagram showing the invention embodied by different voltage sources, individual rectifiers and individual regulators to account for motor driving power supply or battery charging power supply is given in Fig. 7, in which are represented circuit schematics for the supply of different A.C. voltage by way of two independent secondary winding or tap winding sets straight or by the intervention of transformer complete with two sets of rectifier circuits and exclusively independent regulators by which the motor driving power supply and the battery charging power supply are governed; as shown in the Fig.7, there are two sets of auxiliary power supply in the form of D.C. charge converted from A.C. source by way of rectifiers BR201, BR202, with one set serving as the power supply to drive motor or otherwise load, designated VM+, and the other set accounting for the power supply VB+ to charge battery BAT101, with the rectifier BR201 intervened by a serial connection of impedance means or wave interceptor circuit Z201 to the incoming A.C. source, to restrict charging current to the motor or other loads; the rectifier BR202 intervened by a serial connection of impedance means or wave interceptor circuit Z202 to the A.C. source, so as to restrict charging current to the battery BAT101, whereof the positive output terminal VB+ is made in forward series with a diode CR201, leading to the power side VM+ of the motor; said impedance means or wave interceptor Z201, Z202 are good not only for installation way between the incoming A.C. source and the rectifier BR201, BR202, but also good for serial connection to the D.C. input terminal of rectifiers BR201, BR202 where appropriate; the A.C. source is of the single phase or multiple phase mode for straight input or for input by the intervention of a transformer, the battery mentioned in the foregoing is executed where appropriate, either fixed as an installation in a circuit or as a mobile, removable installation in a plug/socket assembly or otherwise combination form, associated with the primary circuit, featuring: (1) charging of the battery BAT101 the A.C. to D.C. mode; (2) charging of the battery BAT101 by D.C. converted from A.C. and the same current as input of power to the load; (3) charging of the battery BAT101 by D.C. converted from A.C. and the same current by way of the battery BAT101 delivering power to the load; (4) the battery BAT101 singly delivering power eventually to the load; (5) the battery BAT101 functioning as a filter, whereof that output terminal going to the load side is optionally equipped with a drive control CD101 1 serving to control output voltage or output current or output polarity or serving to protect in the event of an overloading condition, by actuating the associated control circuits.

By the invention titled Automatic Surveillant Revolving Storage Battery Auxiliary Charging System described in the foregoing it is made possible to put the storage battery in a power storage condition that is better and more desirable than what is possible heretofore, serving not only to assist in the operation of a loading system, but also to avoid over-discharging the storage battery, thus achieving eventually the ultimate goal of prolonging service life of the battery assembly at large.

## Claims

1. Automatic Surveillant Revolving Storage Battery Auxiliary Charging System, comprising:
Battery BAT101: which is basically a secondary battery capable of repeated charging/discharging recycling operation, which can be, for example, a battery of the plumbic acid, nickel/cadmium, nickel/nitrogen, or nickel/zinc structure or else of the lithium system, or still of the zinc system battery or otherwise secondary battery, such a battery being irremovably installed to the circuit or alternatively instead installed complete with plug or socket assembly or with coupling allowing for rapid assemblage or removal;
Storage status detector BCD101: which is provided to conduct continuous or periodical testing or else to convert to digital or analogue power signal output for comparisons using as parameter the terminal voltage, or internal impedance, or volume or specific weight, as well as charging or discharging, or static loading errors for correction purposes; and consists of analogy comparison circuits incorporating electromechanical or solid state electronic elements, or alternatively digital comparison circuits incorporating microprocessor, associated software and interface electronic accessories; this detector assembly being an optional device;
Regulator RG101: composed of mechanic or solid state electronic elements, which by initiating a referring to the output voltage/current of an auxiliary power supply PS100 which incorporates a D.C. charging capability by conversion from generator G101 or an A.C. line voltage, or by simply following an instruction issued from CCU101, feeds back the power rate that is being delivered from said auxiliary power supply PS 100 in the form of a D.C. charging power converted from the A.C. line voltage or from the generator G101, this being an optional device subject to system considerations;
Current detector ID100: connected to the output terminal of the auxiliary power supply PS 100 which takes the form of a D.C. charging means converted from generator G101 or an A.C. line voltage, with current sampling means comprising resistive or conductive elements or a combination of both, but essentially resistive, or still in the form of a semiconductor voltage drop element, or still comprising field strength sensor, other means of heat cumulation or electromagnetic effect type capable of yielding current testing values to be converted into analogue signals with which to produce an output current for the generator G101, by which to control, regulate the regulator RG101, or else to be fed to CCU101, so as to control in turn the operation condition of generator G101, which is also an optional feature;
Current detector ID200: connected in series between input/output terminals of battery BAT101 and the drive control CD101 or rectifier IVT101; with current sampling means comprising purely resistive elements or purely conductive elements or a combination of both, or still semiconductor voltage drop element; or alternatively which may be comprised of a device by which analogue signals may be produced basing on the current determined by means of field strength sensors or heat cumulative or field effect probing units, serving to determine the current coming from or delivered to the battery set, and that meant to pass to the drive control CD101 or CCU101, this in turn to control the output power rate of the battery BAT101; this detector being an optional feature dependent on system considerations;
Auxiliary power supply PS101: in the form of a revolving or reciprocating internal combustion engine assembly ICE101 meant to deliver output of kinetic mechanic energy by the combustion of gasoline, diesel oil, or gas or other form of fluid fuel in combination with A.C., D.C., brushless or brushed armature assembly, that is, generator G101, serving to convert the incoming engine revolving kinetic energy into D.C. power, or alternatively to convert A.C. power through rectification at rectifier BR101 into D.C. power; or alternatively the same PS101 is executed in a means to convert A.C. line voltage potential into D.C. charging power, serving eventually to drive load motor M101 or other loads, and to charge batteries;
Rectifier BR101: to convert by rectifying single phase or multiple phase A.C. power into D.C. power in dealing with A.C. generators, this being an optional feature dependent upon system requirements;
Field excited control FEC101: composed of mechanic or solid state elements, to control the power generating from A.C. or D.C. generator comprising field excited windings, basing on generator output status and the manual control device MI101 and CCU101 settings, so as to achieve in regulatory control of voltage, current or power rate, this feature to be saved where the generator pole is of a permanent magnet type;
Engine speed detector SPD101: analogy or digital in execution, capable of converting angular displacements into correspondent electric signals in electromagnetic or photoelectric forms so as to feed engine speed signals to CCU101, and consequently regulate the feed of fuel way from servo-mechanism FC101, to engine set, whiie signal value of this device can also be substituted by the analogous voltage or frequency value of generator G101; this engine speed detector SPD101 can also be made to consist of mechanical structure, such as, for example, centrifugal testing structure or otherwise mechanical structure, and made in mechanical interaction with fuel supply servo-mechanism FC101 so as to bring engine set ICE101 into fixed speed rotation, both executions disclosed hereinbefore are to be adopted depending on the nature of the system involved, and the device on top of that, is an optional feature contingent on system requirements;
Starter Motor M100: composed of an electric structure synchronous or asynchronous, A.C. or D.C., brushed or brushless, to receive input power so as to produce revolving power to initiate in turn the engine set ICE101, this being an optional feature dependent on system requirements;
Fuel supply servo-mechanism FC101: to receive electric power servo instructions or alternatively mechanic interaction, structured so as to control the fuel supply to engine set ICE101, and that in turn to regulate rotation speed and torsion on the part of engine set ICE101, this being an optional feature contingent upon system requirements;
Fuel tank TK101: where engine fuel is stored, to control fuel supplied to engine set ICE101 by means of fuel line and fuel supply servo-mechanism FC101 interconnected therebetween, this being an optional feature;
Drive control CD100: comprising essentially mechanical or solid state power elements and associated circuits, to drive starter motor M100 into operation or else to stop its operation, this being an optional feature dependent upon system requirement, or contingent upon circuit configurations;
Drive control CD101: composed of mechanical or solid state elements and relevant circuits, to control the load motor M101 for forward/reverse rotation, speed regulation, startup and stop setting, in respect of which the quantity to be supplied per item is dependent upon system requirement, and this feature, on the whole, is optional upon system requirement too;
Load motor M101: composed of A.C. or D.C., brushed or brushless, synchronous or asynchronous motor, realizing forward rotation, reverse rotation, speed regulation, operation and stoppage and such like functions so as to transmit a load, this load motor M101 may also be in the form of another load or still, be replaced by another load, in respect of which the quantity of installation is dictated by system requirements;
Auxiliary power supply B+: with power sourced to battery BAT101 in the system, or with an additionally provided battery set serving as the auxiliary power supply or as derived from generator generation, and that in an effort to offer power supply to the central control unit CCU101, or manual control device MI101, or the drive control CD101 to load motor M101, or drive control CD100 to starter motor M100, or to field excited control FEC101, or still regulator RG101, or still else such as lighting facilities for actuation; where an auxiliary battery set is provided, the generator may be additionally furnished with correspondent power windings basing on required voltage and current capacities to facilitate charging of the auxiliary battery, this feature being an option contingent on system requirements;
D.C. to A.C. inverter IVT101: composed of solid state power rate elements and associated circuits, to convert D.C. power into A.C. power so as to drive A.C. loads, in respect of which the quantity to be supplied is contingent upon system requirements;
Central control unit CCU101: composed of mechanical or solid state elements which form alternatively analogy or digital structure or a combined structures of both executions; or still of micro-processor comprising operation and control software, D-A converter and A-D converter or other associated circuit elements, with control modes established internally basing on instructions given by manual control MI101 or on feedback signals instead, so as to control and manipulate interactions between the system generator G101, the auxiliary power supply PS101 in the form of D.C. Charge converted from an A.C. line feeder, the battery BAT101 and the load motor M101 or otherwise load, and the operation of other relevant installations as well; this being an optional feature contingent upon system requirements;
Manual control device MI101: composed singly of mechanic or solid state elements in analogy mode or digital mode as separate from or else in combination with each other, for feeding to the central control unit so as to control the overall system operation, in respect of which the quantity to be installed is dependent upon system requirements; and for that reason, this is an optional feature.

2. Automatic Surveillant Revolving Storage Battery Auxiliary Charging System according to claim 1, whereof the auxiliary power supply PS100 is in the form of an engine generator, or alternatively in the form of D.C. charge converted from an A.C. line feeder; so as to offer timely auxiliary charging to transmit a load motor or otherwise loads, or still to stationary or vehicle laden, or portable batteries. In operation, testing measurement is made, basing on manual control modes, or else on central control unit programmed for the purpose with battery storage condition taken into account, whereby circuit testing signal value is compared with aforementioned controlled or setting value, and that bringing about proportionate, controlled operation of the engine driven generation set or the auxiliary power supply PS 100 in the form of D.C. charge converted from an A.C. line feeder, incorporating optionally various functions including any or all of the following:
(1) When the system is not actuated to drive a load, and the battery saturation status has been confirmed to drop to a level below a prescribed threshold, the engine starter motor must be activated manually or electrically and that in turn will initiate engine and generator set to charge the battery alone, the charging may alternatively take place by an A.C. line system such that charging is suspended once saturation is reached in the battery;
(2) To drive a load, a comparison is made of the saturation status of the battery in reference to the operation model set in the CCU, to follow that, the generator is regulated, or alternatively, the auxiliary power supply PS 100 in the form of D.C. charge converted from an A.C. line system, is operated to deliver output power of a constant current or controlled current, or alternatively, of a constant rated power, or of a controlled rated power, such that once the power required by the load exceeds the auxiliary power supply PS 100, power required by the load motor or otherwise load will be jointly met by those supplied from the auxiliary power supply and the battery; and where power required by the load is less than the auxiliary power supply PS 100, the latter may feed power to the load and feed surplus power to the battery at the same time, and once the load is augmented in this manner to a level exceeding the power rating of the auxiliary power supply PS100, the system will shift automatically to operate in the model of function(3), while returning to rated power functioning where rated power on the load is inferior to the auxiliary power supply PS 100;
(3) To run a power output under fixed current or controlled current, fixed power or controlled power condition, from the generator or from the auxiliary power supply PS 100 in the form of D.C. charge converted from an A.C. line system, as controlled as a function of the level of saturation detected of the battery, that in order for the auxiliary power supply PS100 and battery to jointly activate the load motor or otherwise load pursuant to proportionate apportionment respecting the auxiliary power supply PS 100 against the load power factor, or as regards current rapports, such that when the load is downgraded or the load power factor falls below the power factor of the auxiliary power supply PS 100, and the system will shift to operate according to (2), in the negative case power available will remain functioning as usual for operation;
(4) The ability to verify load current status of the load motor when driven by the battery alone, such that once the power factor of the Load Motor or other loads rises to a level beyond the set value or beyond the set time, the auxiliary power supply PS 100 will effect a constant current or controlled current output, or instead effect a constant power factor or controlled power factor output, as a function of the control model having been set in the CCU, in an effort to drive the load in coordination with the battery, so that the auxiliary power supply PS 100 may continue to deliver output of power to the load motor or another load once the power factor on the part of the load motor or of another Load resumes a normal level;
(5) The ability to drive engine and generator duly in response to manipulation of manual control assembly, such an ability to drive extends to an auxiliary power supply PS 100 in the form of a D.C. charge converted from an A.C. line system, and the ability includes further independent driving of a load motor or other load by the output power from the same auxiliary power supply PS 100, and the same output power together with battery power to jointly drive a load in the event the load in the load motor is increased, and that output power from the auxiliary power supply PS100 continuing to be delivered to the load when the battery stops outputting once the motor load resumes on a normal track;
(6) The ability to accept manipulation from the manual control unit so as to initiate engine and generator or an auxiliary power supply PS100 in the form of D.C. charge converted from an A.C. line system for a fixed current or controlled current output, or instead for a constant power factor or controlled power factor output, whereby proportionate apportionment is executed respecting the load power factor vis-à-vis current charge to drive the load motor and to charge the battery, such that the mode of operation will automatically shift to function (7) once the load is increased to a level beyond the charging power supply power factor, but switch back to the present mode of operation in the negative case;
(7) The ability to accept manipulation from the manual control unit so as to initiate engine and generator or an auxiliary power supply PS100 in the form of D.C. charge converted from an A.C. line system, for fixed current, controlled current mode, or else fixed power rating, or controlled power rating mode output, and that in appropriate apportionment vis-à-vis the battery basing on generation power factor or loading power factor or current differential between both, whereby the auxiliary power supply PS100 together with the battery take charge of the driving of the load motor or otherwise loading, such that the system shifts automatically to function (6) once the load is alleviated such that the rated loading power drops below the rated power of the auxiliary power supply PS100, but resumes operating under this function in the negative case;
(8) The ability to accept manipulation from manual control unit so as to initiate engine and generator or the auxiliary power supply PS 100 in the form of D.C. charge converted from an A.C. line feeder for independent charge with respect to the battery;
(9) The provision to stop charging once the battery has reached predetermined saturation level as detected in the course of charging operation described under functions (1) and (8) hereinbefore;
(10) The provision to stop charging with respect to the battery without affecting power output being delivered from the auxiliary power supply PS100 to the motor or otherwise load through manipulation by means of either the manual control unit or of the central control unit once the battery reaches a predetermined level in the course of operation pursued under function (2) and (6) described hereinbefore;
(11) The provision to stop charging with respect to the auxiliary power supply PS100 concurrent with power being output to the motor or otherwise load way from the battery by means of manual mode control or CCU control once the battery has reached a predetermined saturation point as detected in the course of operation pursued under function (2)and (6) described hereinbefore;
(12) The provision for the engine generator assembly or the auxiliary power supply PS 100 in the form of D.C. charge converted from an A.C. line feeder to continue operation while the battery switches from a charging state into feeding, in a joint effort with the auxiliary power supply PS 100, power to the motor or otherwise load, through manual control or central control unit control, once the battery has just reached a predetermined saturation level detected in the course of a charging operation described pursuant to function (2) and (6) hereinbefore.

3. Automatic Surveillant Revolving Storage Battery Auxiliary Charging System according to claim 1, whereof with power output of the generator G101 or else released from the auxiliary power supply PS100 in the form of D.C. charge converted from an A.C. line feeder set in parallel straight with the battery BAT101, disparity in battery saturation status will have the effect such that generator G101 produces a surge charging with respect to battery BAT101 so long as the battery remains at a relatively lower capacity level, it is then time to operate by means of the following control circuits comprising:
The arrangement for a blocking diode CR101 to be connected in forward series to battery BAT101, to thence form a parallel output with the D.C. output terminal straight of generator G101 or alternatively with that D.C. output terminal resultant from rectification of an A.C. source, or still with the auxiliary power supply PS100 in the form of D.C. charge converted from an A.C. line feeder, while across both ends of the diode CR101 is paralleled a regulator RG101, so that RG101 is made active to regulate power that is charged way from the Generator or alternatively the said auxiliary power supply PS100 in the form of D.C. charge converted from an A.C. line feeder to the battery; RG101 may be further adapted to be a receptor to control signals emitted from CCU101 basing on the testing result from battery storage detector BCD 101 so as to allow for regulation of charging rates or currents, and for control of startup or stopping of charging functions as well.

4. Automatic Surveillant Revolving Storage Battery Auxiliary Charging System according to claim 1, whereof with power output of the generator G101 or eise released from the auxiliary power supply PS 100 in the form of D.C. charge converted from an A.C. line feeder set in parallel straight with the battery BAT101, disparity in battery saturation status will have the effect such that generator G101 produces a surge charging with respect to battery BAT101 so long as the battery remains at a relatively lower capacity level, it is then time to operate by means of the following control circuits comprising:
The arrangement for a blocking diode CR101 to be connected in forward series to battery BAT101, to thence form a parallel output with the D.C. output terminal straight of generator G101 or alternatively with that D.C. output terminal resultant from rectification of an A.C. source, or still with the auxiliary power supply PS100 in the form of D.C. charge converted from an A.C. line feeder.

5. Automatic Surveillant Revolving Storage Battery Auxiliary Charging System according to claim 1, whereof with power output of the generator G101 or else released from the auxiliary power supply PS 100 in the form of D.C. charge converted from an A.C. line feeder set in parallel straight with the battery BAT101, disparity in battery saturation status will have the effect such that generator G101 produces a surge charging with respect to battery BAT101 so long as the battery remains at a relatively lower capacity level, it is then time to operate by means of the following control circuits comprising:
The arrangement for a blocking diode CR101 to be serially forwardly connected to the battery BAT101, to thence form a parallel output with the D.C. output terminal straight of generator G101 or alternatively with that D.C. output resultant from rectification of an A.C. source, or still with the auxiliary power supply PS 100 in the form of D.C. charge converted from an A.C. line feeder, across said blocking diode CR101 may be paralleled an impedance element Z101 which is essentially resistive or conductive or a combination of both, to replace the function of the regulator RG101, to thereby restrict the current that is being released from the auxiliary power supply PS100 into the Battery.

6. Automatic Surveillant Revolving Storage Battery Auxiliary Charging System according to claim 1, whereof with power output from the generator G101 or else released from the auxiliary power supply PS100 in the form of D.C. charge converted from an A.C. line feeder set in parallel straight with the battery BAT101, disparity in battery saturation status will have the effect such that generator G101 produces a surge charging with respect to battery BAT101 so long as the battery remains at a relatively lower capacity level, it is then time to operate by means of the following control circuits comprising:
The arrangement for a blocking diode CR101 to be serially forwardly connected to the battery BAT101, to thence form a parallel output with the D.C. output straight of generator G101 or alternatively with that D.C. output resultant from rectification of an A.C. source, or still with the auxiliary power supply in the form PS 100 of D.C. charge converted from and A.C. line feeder, across said blocking diode CR101 may be paralleled an electromechanical or solid state controllable two-way switch SSW101, to allow for on/off control of the outputs of both the battery BAT101 and the auxiliary power supply PS 100 and that in substitution of the function of the regulator RG101, and that eventually serving to control the charging state on the part of the generator G101 or the auxiliary power supply PS100 in the form of D.C. charge converted from an A.C. line feeder with respect to the battery BAT101 and next, the charging state of said battery BAT101, interpreted as output, to the load motor M101.

7. Automatic Surveillant Revolving Storage Battery Auxiliary Charging System according to claim 1, whereof with power output from the generator G101 or else released from the auxiliary power supply PS100 in the form of D.C. charge converted from an A.C. line feeder set in parallel straight with the battery BAT101, disparity in battery saturation status will have the effect such that generator G101 produces a surge charging with respect to battery BAT101 so long as the battery remains at a relatively lower capacity level, it is then time to operate by means of the following control circuits comprising:
The arrangement for a blocking diode CR101 1 together with a regulator RG101 or an impedance element Z101 bearing similar functions or a controllable two-way switch SSW101 to be made in forward series with the output of the battery BAT101, so that the D.C. power that is supplied by the generator G101, or else by the auxiliary power supply PS100 in the form of D.C. charge converted from an A.C. line feeder, the output of the diode CR101 that is in forward series with the battery BAT101, and the output of the regulator RG101 or of the impedance element bearings similar functions Z101 or still of the controllable two-way switch SSW101, are of like polarity and this triplicate point is made in common with that switch SSW102 composed of electromechanical or solid state elements, on which the point C is controllable, with one end of the auxiliary power supply PS 100 connected to the common point (COM) on the Switch SSW102 featuring a controllable point C, and with the output of the diode CR101 and the input of the regulator RG101 be electively, as per circuit requirements, connected to the normally open (NO) point or normally closed (NC) point on the switch SSW102 featuring a controllable point C, what is achieved is the control, by means of the auxiliary power supply PS100, of the charging state of the battery, on one hand, and, of the output state on the part of the battery, with respect to the load motor M101 or otherwise Loads, on the other hand. The battery wherever mentioned hereinbefore, is executed where appropriate, either fixed as an installation in a circuit, or as a mobile, removable installation in a plug/socket assembly or otherwise combination form, associated with the primary circuit, featuring: (1) charging of the battery BAT101 the A.C. to D.C. mode; (2) charging of the battery BAT101 by D.C. converted from A.C., and the same current as input of power to the load; (3) charging of the battery BAT101 by D.C. converted from A.C. and the same current by way of the battery BAT101 delivering power to the load; (4) the battery BAT101 singly delivering power eventually to the load; (5) the battery BAT101 functioning as a filter, whereof that output terminal going to the load side is optionally equipped with a drive control CD101 serving to control output voltage or output current or output polarity or serving to protect in the event of an overloading condition, by activating the associated control circuits.

8. Automatic Surveillant Revolving Storage Battery Auxiliary Charging System according to claim 1, whereof the auxiliary power supply PS100 in the form of D.C. charge converted from an A.C. line feeder, way from being delivered as output by way of Rectifier BR201, following passage of incoming A.C. through serially connected impedance or wave interceptor circuit Z201, serves straight as the power supply VM+ to the motor or otherwise load, on the one hand, and as the charging power supply VB+ to battery BAT101 by way of serial connection of a regulation means, on the other hand, both power supplies defined as such constitutes the auxiliary power supply PS 100, with the impedance means or wave interceptor circuit Z201 in series with the A.C. side or the D.C. output side serving the purpose of current restriction, whereas the regulator RG101 in series with the D.C. output of the auxiliary power supply, constituted of analogy or wave interceptor circuits, serving to restrict charging current to the battery BAT101, of which the positive output terminal VB+ is fed to the power side VM+ of motor by way of a forward, serially connected diode CR201, the battery mentioned in the foregoing is executed where appropriate, either fixed as an installation in a circuit, or as a mobile, removable installation in a plug/socket assembly or otherwise combination form, associated with the primary circuit, featuring: (1) charging of the battery BAT101 the A.C. to D.C. mode; (2) charging of the battery BAT101 by D.C. converted from A.C., and the same current as input of power to the load; (3) charging of the battery BAT101 by D.C. converted from A.C. and the same current by way of the battery BAT101 delivering power to the load; (4) the battery BAT101 singly delivering power eventually to the load; (5) the battery BAT101 functioning as a filter, whereof that output terminal going to the load side is optionally equipped with a drive control CD101 serving to control output voltage or output current or output polarity or serving to protect in the event of an overloading condition, by activating the associated control circuits.

9. Automatic Surveillant Revolving Storage Battery Auxiliary Charging System according to claim 1, whereof the schematics for the auxiliary power supply PS100 in the form of D.C. charge converted from an A.C. line feeder serves as the power supply to drive the motor, on the one hand, and to drive, that is, to charge the battery, on the other hand, as executed in like voltage A.C. source in conjunction with two sets of rectifier circuits and severally independent regulators, comprising essentially two sets of auxiliary power supply in the form of D.C. charge converted from A.C. source by way of rectifiers BR201 and BR202, with one set serving as the charging power supply VM+ to the motor or other load, on the one hand, and as the charging power supply VB+ to the battery BAT101, with the rectifier BR201 intervened by a serial connection of impedance means or wave interceptor circuit Z201 to the incoming A.C. source, to restrict charging current to the motor or other loads; the rectifier BR202 intervened by a serial connection of impedance means or wave interceptor circuit Z202 to the A.C. source, so as to restrict charging current to the battery BAT101, whereof the positive output terminal VB+ is given in forward series with a diode CR201, leading to the power side VM+ of the motor; said impedance means or wave interceptor Z201, Z202 are good not only for installation way between the incoming A.C. source and the rectifiers BR201, BR202, but also good for serial connection to the D.C. input terminal of rectifiers BR201, BR202, where appropriate; the A.C. source is of the single phase or multiple phase mode for straight input or for input by the intervention of a transformer, the Battery mentioned in the foregoing is executed where appropriate, either fixed as an installation in a circuit or as a mobile, removable installation in a plug/socket assembly or otherwise combination form, associated with the primary circuit, featuring: (1) charging of the battery BAT101 the A.C. to D.C. mode; (2) charging of the battery BAT101 by D.C. converted from A.C. and the same current by way of the battery BAT101 delivering power to the load; (3) charging of the battery BAT101 by D.C. converted from A.C. and the same current by way of the battery BAT101 delivering power to the load; (4) the battery BAT101 singly delivering power eventually to the load; (5) the battery BAT101 functioning as a filter, whereof that output terminal going to the load side is optionally equipped with a drive control CD101 serving to control output voltage or output current or output polarity or serving to protect in the event of an overloading condition, by actuating the associated control circuits.

10. Automatic Surveillant Revolving Storage Battery, Auxiliary Charging System according to claim 1, whereof the circuit for the auxiliary power supply PS100 in the form of D.C. charge converted from an A.C. line feeder serves concurrently as a power supply to drive the motor, on the one hand, and to drive battery, on the other hand, and is composed of sources of different voltages, individual rectifier units and individual regulators, more specifically, comprising independent secondary winding sets or tap winding sets straight or by the intervention of transformers, to feed power to differently rated voltage A.C. sources, two sets of rectifier circuits and severally independent regulators; there are two sets of auxiliary power supply in the form of D.C. charge converted from A.C. source by way of rectifiers BR201, BR202, with one set serving as the power supply to drive motor or otherwise load, designated VM+, and the other set accounting for the power supply VB+ to charge battery BAT101, with the rectifier BR201 intervened by a serial connection of impedance means or wave interceptor circuit Z201 to the incoming A.C. source, to restrict charging current to the motor or other loads; the rectifier BR202 intervened by a serial connection of impedance means or wave interceptor circuit Z202 to the A.C. source, so as to restrict charging current to the battery BAT101, whereof the positive output terminal VB+ is made in forward series with a diode CR201, leading to the power side VM+ of the motor; said impedance means or wave interceptor Z201, Z202 are good not only for installation way between the incoming A.C. source and the rectifier BR201, BR202, but also good for serial connection to the D.C. input terminal of rectifiers BR201, BR202 where appropriate; the A.C. source is of the single phase or multiple phase mode for straight input or for input by the intervention of a transformer, the battery mentioned in the foregoing is executed where appropriate, either fixed as an installation in a circuit or as a mobile, removable installation in a plug/socket assembly or otherwise combination form, associated with the primary circuit, featuring: (1) charging of the battery BAT101 the A.C. to D.C. mode; (2) charging of the battery BAT101 by D.C. converted from A.C. and the same current as input of power to the load; (3) charging of the battery BAT101 by D.C. converted from A.C. and the same current by way of the battery BAT101 delivering power to the load; (4) the battery BAT101 singly delivering power eventually to the load; (5) the battery BAT101 functioning as a filter, whereof that output terminal going to the load side is optionally equipped with a drive control CD101 serving to control output voltage or output current or output polarity or serving to protect in the event of an overloading condition, by actuating the associated control circuits.

11. An automatic surveillance revolving storage battery auxiliary charging system comprising means for comparing the value controlled by an artificial control or the value set by a central control unit, with a test signal produced by a battery charge level detector circuit, operating in line with the artificial control or the central control unit, so as to drive, in a controlled manner, an auxiliary power supply in the form of a D.C. charge converted from an A.C. line feeder or to drive an engine generator directly.
